# EUROPEAN PATENT SPECIFICATION

(11) **EP 3 174 750 B1**
(45) Date of publication and mention of the grant of the patent: **08.01.2020**
(21) Application number: 15730497.3
(22) Date of filing: 19.06.2015
(51) Int. Cl.: B60K 15/03, B60K 15/035, B60K 15/04, F01N 3/20

(54) **FILLER NECK FOR A LIQUID RESERVOIR, IN PARTICULAR FOR A UREA RESERVOIR**
FÜLLSTUTZEN FÜR EIN FLÜSSIGKEITSRESERVOIR, INSBESONDERE FÜR EIN HARNSTOFFRESERVOIR
GOULOT DE REMPLISSAGE POUR UN RÉSERVOIR DE LIQUIDE, EN PARTICULIER POUR UN RÉSERVOIR D'URÉE

(30) Priority: 29.07.2014 DE 102014010989
(43) Date of publication of application: 07.06.2017
(73) Proprietor: Kautex Textron GmbH & Co. KG, 53229 Bonn (DE)
(72) Inventor: KENDRICK, Phillip, Fort Worth, Texas 76102 (US)
(74) Representative: Richly & Ritschel Patentanwälte PartG mbB
(86) International application number: PCT/EP2015/063810
(87) International publication number: WO 2016/015918

(56) References cited:
- EP-A1- 2 752 326
- DE-A1-102008 005 717

## Description

The invention refers to a filler neck for a liquid reservoir, in particular for a urea reservoir having a neck housing defining a first receiving structure for a filler nozzle and defining a filler channel into a filling tube of the reservoir and/or into the reservoir, said housing comprising a top housing portion with a mouth hole stub, a bottom housing portion and a filling inlet funnel.

Relevant prior art is described in EP 2 752 326 A1 and DE 10 2008 005717 A1

A filler neck of the above-referred kind is for instance disclosed in WO 2012/100906 A2. This publication relates to a filler neck for an auxiliary liquid reservoir for a motor vehicle, in particular for a urea reservoir, having a neck housing, which defines a mouth hole stub for a filler nozzle and a filling channel leading into the reservoir, wherein a receiving structure for a filler nozzle is provided within the neck housing. At least one venting path, which is of enlarged cross-section and has a chamber-like or labyrinth-like design, is formed with the neck housing, allowing a venting flow parallel and counter to the refilling volume to flow through the neck housing during refilling. The neck housing is formed by a funnel-shaped bottom part and a top part of a cap-type design including the mouth hole stub. The neck housing moreover includes a receiving structure for the filling nozzle, the structure being designed as an inlet nozzle forming an inlet channel of approximately funnel-shaped design. The bottom part and the top part of the neck housing are welded to enclose the inlet nozzle/filling inlet funnel, the filling inlet funnel being arranged floatingly/deflectable within the neck housing.

This design has the draw-back that the leading end of the filler nozzle is only supported in the poorly supported inlet nozzle. Any loads applied to the filler nozzle resulting for example from improper vehicle alignment at the filling station result in application of a moment to the filling nozzle which causes the leading end of the filling nozzle to contact and deflect the receiving structure for the filler nozzle, i.e. the inlet nozzle enclosed by the neck housing. This deflection negatively influences the filling performance since turbulences of the liquid to be filled are produced. These turbulences in turn affect the venting performance as venting is normally conducted parallel and counter to the refilling volume to flow through the neck housing during refilling.

It is therefore an object of the present invention to provide a filler neck of the above-referred kind, which has a design resulting in an enhanced filling performance.

Another drawback with the design of WO 2012/100906 A2 is that the filler neck includes an annular magnet, which is encapsulated in a liquid-tight manner in an annular plastic housing, which is radially fixed and centred within the neck housing. This plastic housing is supported axially against the receiving structure for the filler nozzle. This design is quite complex and costly.

It is thus moreover an object of the present invention to provide a filler neck of the above-referred type, which allows a simple and easy attachment of a magnet for switching a valve in the filler nozzle.

These and other objects are achieved by a filler neck according to independent claim 1. Advantageous embodiments of the filler neck according to the invention are covered and disclosed by the dependent claims.

According to one aspect of the invention, there is provided a filler neck for a liquid reservoir, in particular for a urea reservoir, having a neck housing defining a first receiving structure for a filler nozzle and defining a filling channel into a filler tube of the reservoir, or directly into the reservoir, said neck housing comprising a top housing portion with a mouth hole stub, a bottom housing portion, and a filling inlet funnel, the filling neck being characterized in that the filling inlet funnel is integrally formed with the top housing portion, the bottom housing portion includes a second receiving structure for the filling inlet funnel, and in that the filling inlet funnel extends into said second receiving structure of said bottom housing portion.

The term "filling inlet funnel" in the sense of the current application does not necessarily mean that the filling inlet funnel is a conically shaped part. The term "funnel" is meant to also include inlet nozzles, which are simply cylindrically, i.e. tube-like.

Integrally formed in the sense of the current application means that the filling inlet funnel is an integral part of the top housing portion, i.e. that the inlet funnel and the top housing portion have a one-piece design. The filling inlet funnel for instance may be an injection-molded thermoplastic part.

According to the invention, the inlet funnel extends into the second receiving structure such that it tightly sits in the receiving structure, so that any loads applied to the nozzle are properly received by the neck housing without deflection of the filling inlet funnel, and thus, without affecting the filling performance.

The bottom housing portion of the neck housing may also have a funnel-shaped design, i.e. partly conical design with an enlarged cross-section. At one end facing away from the top housing portion, the bottom housing portion may include a discharge port with a relatively smaller diameter, which leads into a filling tube or directly into the reservoir. The discharge port may also be designed as a fitting for receiving a filling hose bridging the filler neck and the reservoir.

The neck housing may also have one or several venting ports and preferably a venting path is defined within the neck housing.

In one advantageous embodiment of the filler neck according to the current invention, the second receiving structure is integrally formed with the bottom housing portion. The bottom housing portion may also be in injection-molded part of thermoplastic material.

Thermoplastic material suitable for molding a filler neck according to the invention are for example polyethylene, polypropylene, polyamide, polyethylene terephthalate or ABS resin (acrylonnitrile-butadiene-styrene). Basically, any thermoplastic polyolefin and blends of different polyolefins, or any polyamide and blends of different polyamides may be used for obtaining a filler neck according to the present invention.

In a preferred embodiment of the filler neck according to the invention, the second receiving structure peripherally or circumferentially engages said filling inlet funnel.

The filling inlet funnel may simply be plugged into the second receiving structure.

In one advantageous embodiment, the second receiving structure comprises means for centering said filling inlet funnel within said bottom housing portion. The centering means may include centering ribs, which radially engage the filling inlet funnel at its outer circumference.

The centering ribs may be integrally formed with the bottom portion of the neck housing. For example, the centering means may include three centering ribs equally spaced apart from its each other at an angle of 120°. A person skilled in the art will appreciate that the number and spacing of the ribs may vary. Axially extending within the meaning of the current invention means that the ribs extend in the direction of flow of the liquid to be filled.

Said filling inlet funnel may be press-fitted into the centering ribs, i.e. between the centering ribs.

The filler neck according to the invention may comprise at least one magnet attached to said top housing portion.

The magnet may be attached to an inner side of the top housing portion and arranged at the outer circumference of said filling inlet funnel.

In a preferred embodiment of the current invention the magnet is snap-fitted or press-fitted into a receiving space at the inner side of the top housing portion.

The magnet may be received in an annular space of the top housing portion, the annular space surrounding the filling inlet funnel.

The magnet could be in the form of one or more circular segments enclosing the filling inlet funnel. In one embodiment, where the filling inlet funnel is simply designed as a cylindrical tube, a ring-like magnet may be snapped on the filling inlet funnel and may be held in place by one or more catches at the outer circumference of the inlet funnel. These catches or lugs may be arranged at the end of spring legs integrally formed with the filling inlet tube.

In one alternative embodiment, the magnet may be held in place or retained at its outer circumference, for instance in the receiving space of the top housing portion.

The filling inlet tube may include one or more holes or windows as shut-off holes, which are circumferentially arranged and which allow actuation of the filling nozzle in the event the filling nozzle has a circumferentially arranged shut-off bore.

Advantageously, the filler neck according to the current invention may comprise several magnets attached to an inner side of the top housing portion and arranged equally spaced apart from each other at the outer circumference of the filling inlet funnel.

The one or the several magnets may be directly exposed, i.e. no plastic housing for the magnet or the magnets is required nor does the magnet need to be overmolded. The magnet could simply be painted or powder-coated and is thus corrosion-resistant. The magnet could be electrostatically coated, powder coated, galvanized, plasma coated, dip-coated or in any other way treated in order to be corrosion-resistant.

The magnets or the magnet could either be directly snap-fitted in an annular space of the top housing portion or on the outer circumference of the inlet filling funnel or, alternatively, in the top housing portion. One or more grooves or receiving spaces could be provided, in which one or more magnets could be press-fitted.

The invention hereinafter will be described by way of example with reference to the accompanying drawings, in which:
- Figure 1: shows a cross-section through a urea reservoir with a filler neck according to the invention,
- Figure 2: shows a partial longitudinal sectional view of the filler neck according to the invention,
- Figure 3: shows a longitudinal section through the bottom portion of the neck housing,
- Figure 4: shows a perspective view of the top portion of the neck housing,
- Figure 5: shows a bottom view of the top portion of the neck housing, i.e. the inner side of the top housing according to a second embodiment of the filler neck according to the invention, and
- Figure 6: shows a bottom view corresponding to the view shown in Figure 4 according to a third embodiment of the invention.

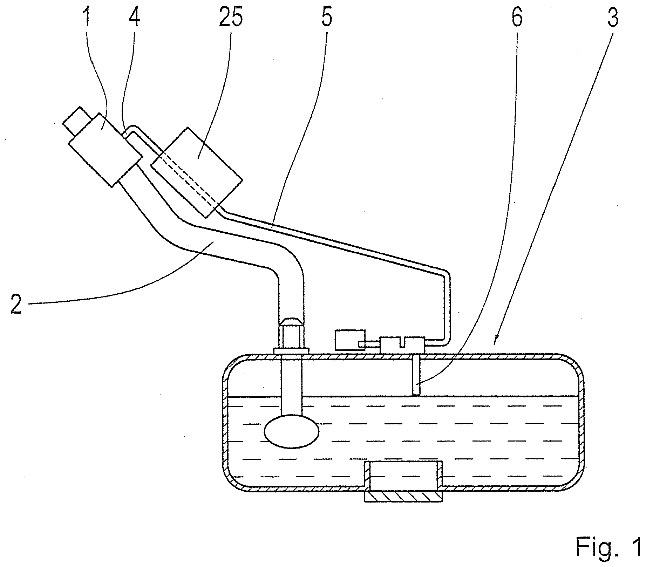

As can be seen from Figure 1, a filler neck 1 according to the invention is arranged on a filler pipe 2 of a liquid reservoir 3, which is arranged within the engine compartment of a motor vehicle, or at any other place within the bodywork of the vehicle. The liquid reservoir 3 may be a urea reservoir for a liquid urea solution as a reducing agent for catalytic removal of nitrogen from exhaust gas on a motor vehicle. The reservoir could also be a reservoir for receiving cleaning fluid for a headlamp or windshield wiper cleaning system. Of course, the reservoir could also be a fuel reservoir.

The liquid reservoir 3 according to the invention can be designed as an extrusion blow-molded plastic reservoir of one piece design. The filler pipe 2 and the filler neck 1 can likewise be composed of a thermoplastic material. In the embodiment described, the entire arrangement comprising the filler neck 1, the filler pipe 2 and the liquid reservoir 3 is in several parts. As will be described below, the filler neck 1 is designed as a filling head with a connection 4 for a return line 5. The return line 5 opens via a dip tube 6 as a cut-off nipple into the liquid reservoir 3 at a predetermined venting position.

The return line 5 is rooted from the liquid reservoir 3 to the filler neck 1 via a compensating reservoir, which serves as a collecting reservoir for any liquid, which arises in the return line 5. During filling of the liquid reservoir 3, a urea solution is introduced into the liquid reservoir via a filler nozzle, with the result that the liquid level in the reservoir rises and the gas in the liquid in the liquid reservoir 3 is displaced via return line 5 to the filler neck 1 until the rising liquid level closes the dip tube 6. The liquid level then rises in the filler pipe 2 until it reaches and closes a cut-off hole in a filler nozzle, thus triggering a switching operation of the filler nozzle. The refilling operation is thus ended. The filler nozzle is not shown in the drawings and not part of the system.

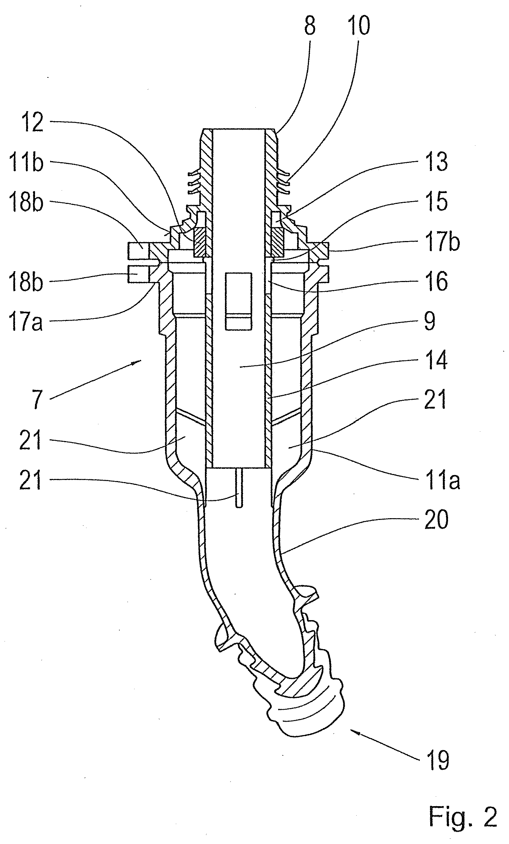

A first embodiment of the filler neck 1 according to the invention is illustrated by way of example in figures 2 to 4. The filler neck 1 comprises a two-part neck housing 7, which on the one hand forms a mouth hole stub 8 for receiving the filler nozzle and on the other hand forms a filling channel 9, the cross-section of which is matched to the filler pipe 2 and merges into the latter. On the outside, the mouth hole stub 8 is provided with a threaded collar 10 onto which a closure cap (not shown) can be screwed. Moreover, the threaded collar 10 may receive a box nut of a so-called "Kruse" bottle. This filling bottle allows filling the liquid reservoir 3 by a gas displacement procedure, i.e. during filling the gas displaced by the liquid while be captured by the bottle.

The neck housing 7 is formed by a funnel-shaped bottom housing portion 11a, and top housing portion 11b of cap-type design. The top housing portion 11b includes the mouth hole stub 8, which is an integral part of the top housing portion 11b.

Arranged in the top housing portion 11b, concentrically with the mouth hole stub 8 is an annular magnet (ring magnet) 12, which interacts as a switching magnet with a sensor (not shown) of the filler nozzle and brings about the release of the filler nozzle inserted in the mouth hole stub 8. The magnet 12 is received within an annular space 13 at the inner side (lower side) of the top housing portion 11b. The annular space 13 surrounds a filling inlet funnel 14, which is an integral part of the top housing portion 11b and in the preferred embodiment is designed as a cylindrical inlet tube/inlet nozzle defining a part of the filling channel 9. The inner diameter of the annular magnet 12 approximately corresponds to the outer diameter of the filling inlet funnel 14. The magnet is simply slipped over the filling inlet funnel and clip-fastened in the annular space 13. The magnet 12 is held in position by two or more catches 15 on the outer circumference of the filling inlet funnel 14. The catches 15 are part of spring legs 16, which are integrally formed with the filling inlet funnel 14. The spring legs 16 are flexible to that extend that they allow the catches 15 to be depressed while the magnet 12 is slipped onto the filling inlet funnel 14. Once the magnet 12 fits into the annular space 13, the catches 15 engage behind the magnet 12 and hold the magnet securely in place.

The magnet 12 is completely exposed, as aforementioned, and does not need any separate or additional housing.

The filling inlet funnel 14 additionally comprises an aperture 24, which allows liquid to reach an axial or, alternatively, radial cut-off hole of the filler nozzle. In the assembled status of the filler neck 1 as shown in figure 1, the top housing portion 11b is fitted onto the bottom housing portion 11a as shown in figure 2.

The top housing portion 11b and the bottom housing portion 11a which are both molded from thermoplastic material each comprise a mounting flange 17a and 17b, the mounting flanges 17a, 17b correspond to each other and in the assembled status of the filler neck 1 are in alignment with each other. The bottom housing portion 11a and the top housing portion 11b are welded together at their mounting flanges 17a, 17b. Additionally, the bottom housing portion 11a and the top housing portion 11b comprise four fixing eyelets 18a, 18b for receiving fastening screws which are not shown. The fastening screws are for mounting the neck housing 7 in the bodywork of the vehicle.

The bottom housing portion 11a has an area of an enlarged cross-section constituting the main body of the filler neck 1 and a discharge port 19, which is at the end of a tube section 20 of a reduced diameter, i.e. of a diameter smaller than the diameter of the main body portion of the filler neck 1. The discharge port 19 in the embodiment as shown is designed as a fitting for receiving a filling tube or a filling hose.

The tube section 20 of the bottom housing portion 11a is slightly bent. However, a person skilled in the art will appreciate that this tube section 20 may also be straight.

The inner diameter of the filling channel 9 is defined by the tube section 20 which approximately corresponds to the inner diameter of the filling inlet funnel 14. In the assembled state, the leading opening of the filling inlet funnel 14 is in alignment with the tube section 20. As can be seen particularly from figure 2, the filling inlet funnel 14 at its leading end is engaged between three centering ribs 21 extending axially within the bottom housing portion 11a and projecting inwardly, i.e. radially.

The centering ribs 21 engage the outer circumference of the filling inlet funnel 14 and are spaced apart from each other at an angle of approximately 120°.

The centering ribs 21 constitute a second receiving structure for receiving the filling inlet funnel 14, which is simply fitted between the centering ribs 21. During filling the gas displaced from the liquid reservoir 3 by the liquid entering the reservoir may escape parallel and counter to the refilling volume to flow through the neck housing 7 and between the centering ribs 21 for example through a venting line (not shown) connected to the filler neck 1 at a vent opening 22.

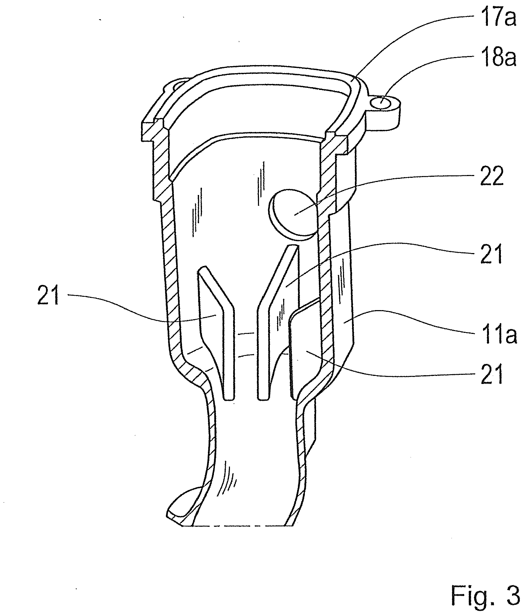

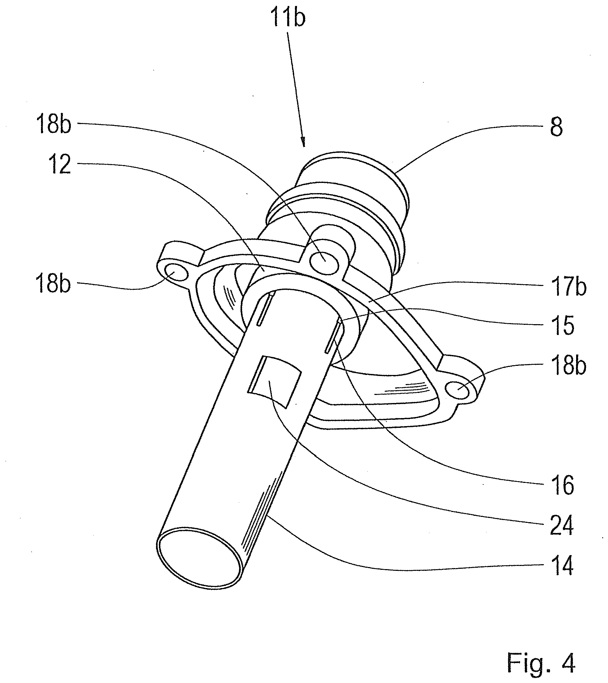

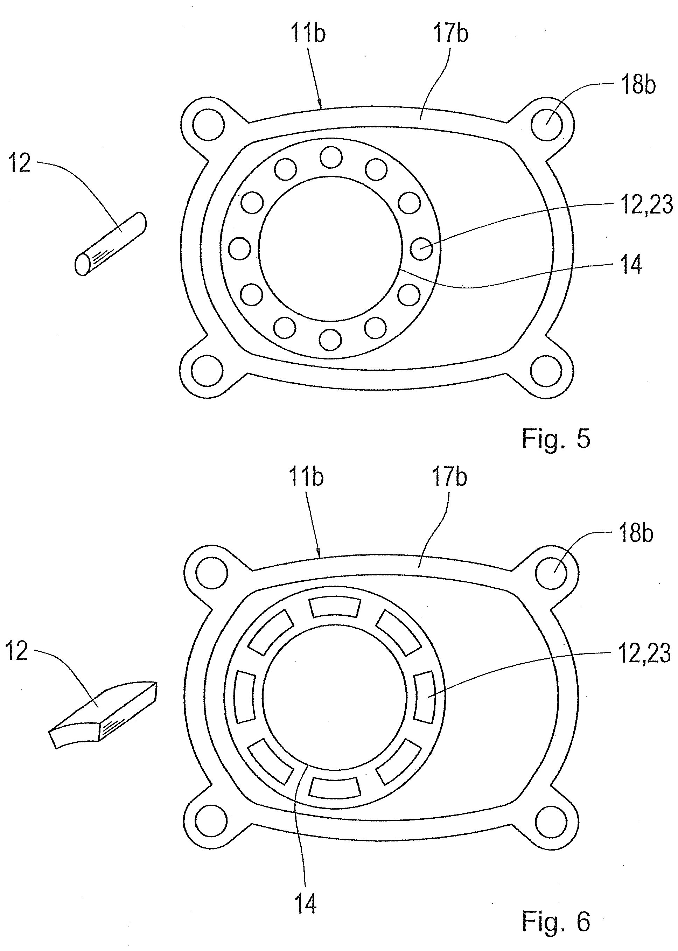

Figures 4 and 5 show alternative embodiments of the top housing portion 11b as shown in figure 3.

Same parts are denoted by the same reference numerals. The top housing portion 11b according to the embodiments shown in figures 4 and 5 comprise several magnets 12, which are rather cylinders or bars than in the form of a ring. The magnets are press-fitted into recesses 23 which have a shape which corresponds to the shape of the magnet 12. Of course, the magnet 12 can also be glued into the recesses 23.

### Reference numerals

- 1: filler neck
- 2: filler pipe
- 3: liquid reservoir
- 4: connection
- 5: return line
- 6: dip tube
- 7: neck housing
- 8: mouth hole stub
- 9: filling channel
- 10: threaded collar
- 11a: bottom housing portion
- 11b: top housing portion
- 12: magnet
- 13: annular space
- 14: filling inlet funnel
- 15: catches
- 16: spring legs
- 17a, b: mounting flange
- 18a, b: fixing eyelet
- 19: discharge port
- 20: tube section
- 21: centering ribs
- 22: vent opening
- 23: recesses
- 24: aperture
- 25: compensating reservoir

## Claims

1. Filler neck (1) for a liquid reservoir (3), in particular for a urea reservoir, having a neck housing (7) defining a first receiving structure for a filler nozzle and a filling channel (9) into a filling tube of the reservoir (3) and/or into the reservoir (3), said neck housing (7) comprising a top housing portion (11b) with a mouth hole stub (8), a bottom housing portion (11a), and a filling inlet funnel (14), the filling inlet funnel (14) being integrally formed with said top housing portion (11b) **characterized in that** the bottom housing portion (11a) includes a second receiving structure for the filling inlet funnel (14), and **in that** said filling inlet funnel (14) extends into said second receiving structure of said bottom housing portion (11a) such that it tightly sits in the receiving structure, so that any loads applied to the nozzle are properly received by the neck housing without deflection of the filling inlet funnel.

2. Filler neck according to claim 1, **characterized in that** said second receiving structure is integrally formed with said bottom housing portion (11a).

3. Filler neck according to anyone of claims 1 or 2, **characterized in that** said second receiving structure circumferentially engages said filling inlet funnel (14).

4. Filler neck according to anyone of claims 1 to 3, **characterized in that** said second receiving structure comprises means for centering said filling inlet funnel (14) within said bottom housing portion (11a).

5. Filler neck according to anyone of claims 1 to 4, **characterized in that** the second receiving structure comprises axially extending and inwardly projecting centering ribs (21), which radially engage said filing inlet funnel (14) at its outer circumference.

6. Filler neck according to claim 5, **characterized in that** the filling inlet funnel (14) is press-fitted into the centering ribs (21).

7. Filler neck according to anyone of claims 1 to 6, **characterized in that** it comprises at least one magnet (12) attached to said top housing portion (11b).

8. Filler neck according to claim 7, **characterized in that** the magnet (12) is attached to an inner side of the top housing portion (11b) and arranged at the outer circumference of said filling inlet funnel (14).

9. Filler neck according to anyone of claims 7 or 8, **characterized in that** the magnet is snap-fitted or press-fitted into a receiving space at the inner side of said top housing portion (11b).

10. Filler neck according to anyone of claims 7 to 9, **characterized in that** the magnet (12) is received in an annular space (13) of said top housing portion (11b), the annular space (13) surrounding said filling inlet funnel (14).

11. Filler neck according to anyone of claims 1 to 10, **characterized in that** it comprises several magnets (12) attached to an inner side of the top housing portion (11b) and arranged equally spaced apart from each other at the outer circumference of the filling inlet funnel.

## Patentansprüche

1. Einfüllstutzen (1) für einen Flüssigkeitsbehälter (3), insbesondere für einen Harnstoffbehälter, mit einem Halsgehäuse (7), das eine erste Aufnahmestruktur für eine Befülldüse und einen Befüllkanal (9) in ein Füllrohr des Behälters und/oder in den Behälter (3) definiert, wobei das Halsgehäuse (7) einen oberen Gehäuseabschnitt (11b) mit einem Mundlochstutzen (8), einem unteren Gehäuseabschnitt (11a) und Einfülltrichter (14) aufweist, wobei der Einfülltrichter (14) einstückig mit dem oberen Gehäuseabschnitt (11b) ausgebildet ist, **dadurch gekennzeichnet, dass**
der untere Gehäuseabschnitt (11a) eine zweite Aufnahmestruktur für den Einfülltrichter (14) beinhaltet und dass sich der Einfülltrichter (14) in die zweite Aufnahmestruktur des unteren Gehäuseabschnitts (11a) erstreckt, so dass er fest in der Aufnahmestruktur sitzt, so dass alle Belastungen, die auf die Düse einwirken, ohne Verformung des Einfülltrichters einwandfrei vom Halsgehäuse aufgenommen werden.

2. Einfüllstutzen gemäß Anspruch 1, **dadurch gekennzeichnet, dass**
die zweite Aufnahmestruktur einstückig mit dem unteren Gehäuseabschnitt (11a) ausgebildet ist.

3. Einfüllstutzen gemäß einem der Ansprüche 1 oder 2, **dadurch gekennzeichnet, dass**
die zweite Aufnahmestruktur umlaufend in den Einfülltrichter (14) eingreift.

4. Einfüllstutzen gemäß einem der Ansprüche 1 bis 3, **dadurch gekennzeichnet, dass**
die zweite Aufnahmestruktur Mittel zum Zentrieren des Einfülltrichters (14) innerhalb des unteren Gehäuseabschnitts (11a) aufweist.

5. Einfüllstutzen gemäß einem der Ansprüche 1 bis 4, **dadurch gekennzeichnet, dass**
die zweite Aufnahmestruktur sich axial erstreckende und nach innen ragende Zentrierrippen (21) aufweist, die radial in den Einfülltrichter eingreifen.

6. Einfüllstutzen gemäß Anspruch 5, **dadurch gekennzeichnet, dass** der Einfülltrichter (14) in die Zentrierrippen (21) eingepresst ist.

7. Einfüllstutzen gemäß einem der Ansprüche 1 bis 6, **dadurch gekennzeichnet, dass**
er zumindest einen Magneten (12) aufweist, der an dem oberen Gehäuseabschnitt (11b) befestigt ist.

8. Einfüllstutzen gemäß Anspruch 7, **dadurch gekennzeichnet, dass** der Magnet (12) an einer Innenseite des oberen Gehäuseabschnitts (11b) befestigt ist und am Außenumfang des Einfülltrichters (14) angeordnet ist.

9. Einfüllstutzen gemäß einem der Ansprüche 7 oder 8, **dadurch gekennzeichnet, dass**
der Magnet einrastend oder eingepresst in einen Aufnahmeraum auf der Innenseite des oberen Gehäuseabschnitts (11b) aufgenommen ist.

10. Einfüllstutzen gemäß einem der Ansprüche 7 bis 9, **dadurch gekennzeichnet, dass** der Magnet (12) in einem ringförmigen Raum (13) des oberen Gehäuseabschnitts (11b) aufgenommen ist, wobei der ringförmige Raum (13) den Einfülltrichter (14) umgibt.

11. Einfüllstutzen gemäß einem der Ansprüche 1 bis 10, **dadurch gekennzeichnet, dass**
er mehrere Magnete (12) aufweist, die an einer Innenseite des oberen Gehäuseabschnitts (11b) befestigt sind und in gleichem Abstand voneinander am Außenumfang des Einfülltrichters angeordnet sind.

## Revendications

1. Goulot de remplissage (1) pour un réservoir de liquide (3), en particulier pour un réservoir d'urée, ayant un boîtier de goulot (7) définissant une première structure de réception pour une buse de remplissage et un canal de remplissage (9) dans un tube de remplissage du réservoir (3) et/ou dans le réservoir (3), ledit boîtier de goulot (7) comprenant une partie boîtier supérieure (11b) avec une extrémité à trou d'ouverture (8), une partie boîtier inférieure (11a), et un entonnoir d'entrée de remplissage (14), l'entonnoir d'entrée de remplissage (14) étant formé d'un seul tenant avec ladite partie boîtier supérieure (11b), **caractérisé en ce que** la partie boîtier inférieure (11a) comprend une seconde structure de réception pour l'entonnoir d'entrée de remplissage (14), et **en ce que** ledit entonnoir d'entrée de remplissage (14) s'étend dans ladite seconde structure de réception de ladite partie boîtier inférieure (11a), de telle sorte qu'il repose hermétiquement dans la structure de réception, de sorte que n'importe quelles charges appliquées sur la buse sont reçues correctement par le boîtier de goulot sans déviation de l'entonnoir d'entrée de remplissage.

2. Goulot de remplissage selon la revendication 1, **caractérisé en ce que** ladite seconde structure de réception est formée d'un seul tenant avec ladite partie boîtier inférieure (11a).

3. Goulot de remplissage selon l'une quelconque des revendications 1 et 2, **caractérisé en ce que** ladite seconde structure de réception vient en prise circonférentiellement avec ledit entonnoir d'entrée de remplissage (14).

4. Goulot de remplissage selon l'une quelconque des revendications 1 à 3, **caractérisé en ce que** ladite seconde structure de réception comprend des moyens de centrage dudit entonnoir d'entrée de remplissage (14) à l'intérieur de ladite partie boîtier inférieure (11a).

5. Goulot de remplissage selon l'une quelconque des revendications 1 à 4, **caractérisé en ce que** la seconde structure de réception comprend des nervures de centrage (21) s'étendant axialement et faisant saillie vers l'intérieur, qui viennent en prise radialement avec ledit entonnoir d'entrée de remplissage (14) au niveau de sa circonférence extérieure.

6. Goulot de remplissage selon la revendication 5, **caractérisé en ce que** l'entonnoir d'entrée de remplissage (14) est ajusté par pression dans les nervures de centrage (21).

7. Goulot de remplissage selon l'une quelconque des revendications 1 à 6, **caractérisé en ce qu'**il comprend au moins un aimant (12) fixé sur ladite partie boîtier supérieure (11b).

8. Goulot de remplissage selon la revendication 7, **caractérisé en ce que** l'aimant (12) est fixé sur un côté intérieur de la partie boîtier supérieure (11b) et agencé au niveau de la circonférence extérieure dudit entonnoir d'entrée de remplissage (14).

9. Goulot de remplissage selon l'une quelconque des revendications 7 et 8, **caractérisé en ce que** l'aimant est encliqueté ou ajusté par pression dans un espace de réception au niveau du côté intérieur de ladite partie boîtier supérieure (11b).

10. Goulot de remplissage selon l'une quelconque des revendications 7 à 9, **caractérisé en ce que** l'aimant (12) est reçu dans un espace annulaire (13) de ladite partie boîtier supérieure (11b), l'espace annulaire (13) entourant ledit entonnoir d'entrée de remplissage (14).

11. Goulot de remplissage selon l'une quelconque des revendications 1 à 10, **caractérisé en ce qu'**il comprend plusieurs aimants (12) fixés sur un côté intérieur de la partie boîtier supérieure (11b) et agencés de manière également espacée les uns des autres au niveau de la circonférence extérieure de l'entonnoir d'entrée de remplissage.
